Europäisches Patentamt

**European Patent Office**

Office européen des brevets

(11) Publication number: **0 142 329**
**B1**

## (12) EUROPEAN PATENT SPECIFICATION

(45) Date of publication of patent specification: **04.10.89**

(21) Application number: **84307693.6**

(22) Date of filing: **07.11.84**

(51) Int. Cl.⁴: **G 01 G 19/32,** G 01 G 19/42

(54) Control system for combinatorial weighing or counting apparatus.

(30) Priority: **08.11.83 JP 209623/83**

(43) Date of publication of application:
**22.05.85 Bulletin 85/21**

(45) Publication of the grant of the patent:
**04.10.89 Bulletin 89/40**

(84) Designated Contracting States:
**DE FR GB IT**

(56) References cited:
**EP-A-0 085 446**
**FR-A-2 425 113**
**GB-A-2 098 422**
**US-A-4 165 633**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Nobutsugu, Hideo**
**Shinwa Yamashina Hi-Life 1012 7-5,**
**Otowanoda-cho**
**Yamashina-ku Kyoto-shi Kyoto (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

Courier Press, Leamington Spa, England.

## Description

The present invention relates to combinatorial weighing or counting apparatus.

A combinatorial weighing apparatus can operate by supplying articles to be weighed to weighing hoppers associated respectively with individual weighing machines, effecting a combinatorial operation on weight values from the weighing machines with an arithmetic control unit, and opening the weighing hoppers of those weighing machines which are found by the combinatorial operation to give a best acceptable (optimum) combination of added weights, closest to a target weight, thus discharging the articles representing the optimum combination of added weights.

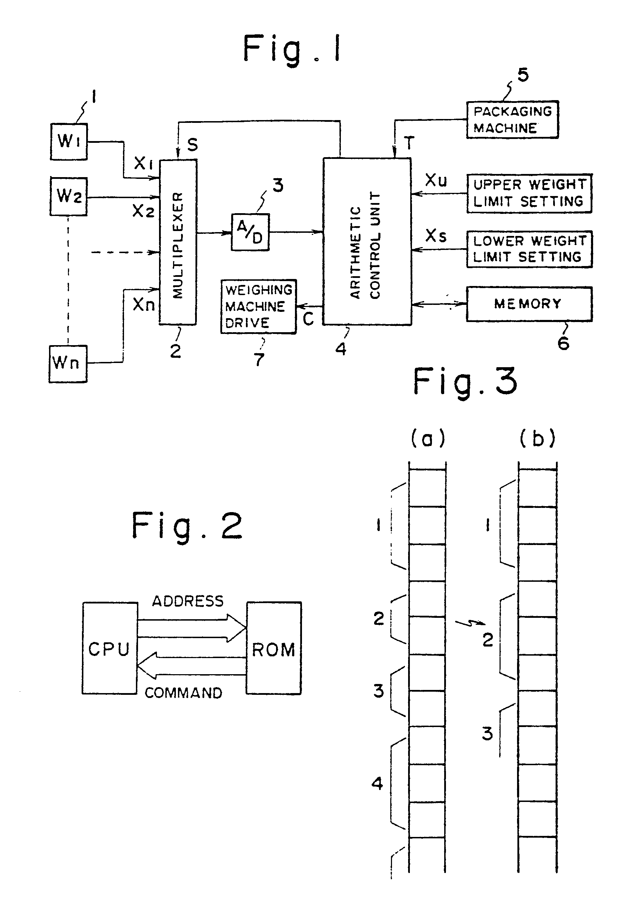

In such a combinatorial weighing apparatus, the weighing hoppers which have discharged their contents are immediately supplied with articles for the next weighing cycle from pool hoppers disposed above the weighing hoppers. The pool hoppers are supplied with distributed articles from a storage unit by means of an electromagnetic feeder. Fig. 1 of the accompanying drawings shows in block form such a combinatorial weighing apparatus. Designated at 1 are a plurality of weighing machines W1 through Wn which issue weight values X1 through Xn (analog signals) to a multiplexer 2. When an arithmetic control unit 4 comprising a computer applies a signal S to the multiplexer 2 in response to a timing signal T from a packaging machine 5, the weight signals applied to the multiplexer 2 are successively fed to an A/D converter 3. The weight signals are converted by the A/D converter 3 into digital signals which are applied to the arithmetic control unit 4. The arithmetic control unit 4 stores the digital signals in a memory 6, reads a necessary command from the memory 6, effects combinatorial additions to find combinations of total weight values, compares the weight combinations with a target weight value Xs, and determines a combination of total weights which is closest to the target weight value Xs. If this best combination of total weights does not exceed an upper weight limit setting Xu, then this combination of total weights is accepted as an optimum combination. With the optimum combination produced, the arithmetic control unit 4 applies a control signal C to a weighing machine driver 7, for operating the weighing hoppers 1 appropriately or a discharge device, and then applies control signals to the electromagnetic feeder and the pool hoppers concerned. EP—A—0,085,446 describes a combinatorial apparatus of this general kind, operating under the overall control of a microprocessor/CPU.

In a control system comprising a central processing unit (CPU), however, it has been found that the CPU may be caused by a noise signal to run out of control. More specifically, a microcomputer generally starts its operation by reading a command from a ROM (read-only memory) into a CPU, as illustrated in Fig. 2 of the accompanying drawings. When the CPU issues address signals to an address bus, in a predetermined order, in response to each signal the ROM automatically delivers an instruction word to a data bus. If the combinatorial weighing apparatus has an electromagnetic feeder actuated by SCRs (thyristors) which are phase-controlled, electric noise signals tend to be applied to the CPU, which signals can cause the CPU to read a wrong instruction word. For example, where there are instruction words 1 through 4 composed of 3 bytes, 2 bytes, 2 bytes, and 3 bytes, respectively, as shown in Fig. 3(a), the instruction word 2 may be read as a 3-byte instruction word, as shown in Fig. 3(b), or an addressing command such as a CALL command or a JUMP command may be read in error, whereupon the microcomputer system will not operate properly.

According to the present invention there is provided combinatorial weighing or counting apparatus, for measuring out a desired batch of articles, comprising:

a plurality of weighing machines for receiving individual quantities of the articles to be measured out and providing respective weight values, indicative of the weights of the individual quantities concerned, or number values indicative of the numbers of articles in the individual quantities concerned; and

selection means including a central processing unit for performing a combinatorial arithmetic operation, on the basis of the said weight or number values and a preset target total weight or number, to select a best acceptable combination of the said individual quantities, and for causing the individual quantities belonging to the selected combination to be discharged from their respective machines and brought together to form a desired batch;

characterised in that the central processing unit of the said selection means is connected, as a master CPU, to control respective drive units of the said weighing machines through the intermediary of respective slave CPUs connected individually to those drive units, each operational command from the master CPU to any one of the slave CPUs comprising an interrupt command to that slave CPU;

and further characterised by signal generating means connected with an AC power supply for each of the said drive units and operable to apply successive auxiliary interrupt signals to each of the said slave CPUs in synchrony with successive zero crossing points of the AC power supply, each slave CPU being such that it is caused by each auxiliary interrupt signal to effect a self-resetting operation which returns the slave CPU to a normal state if it has been running out of control.

A general purpose main (master) CPU with a plurality of slave CPUs is described, incidentally, in FR—A—2,425,113.

Reference will now be made, by way of example, to the accompanying drawings, in which:

Fig. 1 is a block diagram of a combinatorial weighing apparatus;

Figure 2 is a diagram illustrating communications between a CPU and a ROM;

Figs. 3(a) and (b) are diagrams illustrative of the arrangement of instruction words;

Figure 4 is a flowchart showing a use of interrupt processes in an embodiment of the present invention;

Figures 5 and 6 are diagrams illustrating the use of interrupt processes in a prior art system and in an embodiment of the present invention respectively;

Figure 7(A) is a schematic diagram of a control system in a combinatorial weighing apparatus embodying the invention;

Figure 7(B) is a schematic diagram of a drive unit in such an apparatus;

Figure 8 is a flowchart of a processing operation involving a main CPU and a drive unit (slave) CPU;

Figure 9 is a flowchart of an interrupt procedure executed by the drive unit CPU of Figure 8; and

Figure 10 is a waveform diagram illustrative of phase control of an SCR for controlling an electromagnetic feeder.

Generally, a microcomputer starts executing an interrupt program when interrupted by an appropriate electric signal from an external source. Since an interrupt process has highest priority, and a specific start address is prescribed for the interrupt program, the interrupt process is unlikely to be subject to error due to noise.

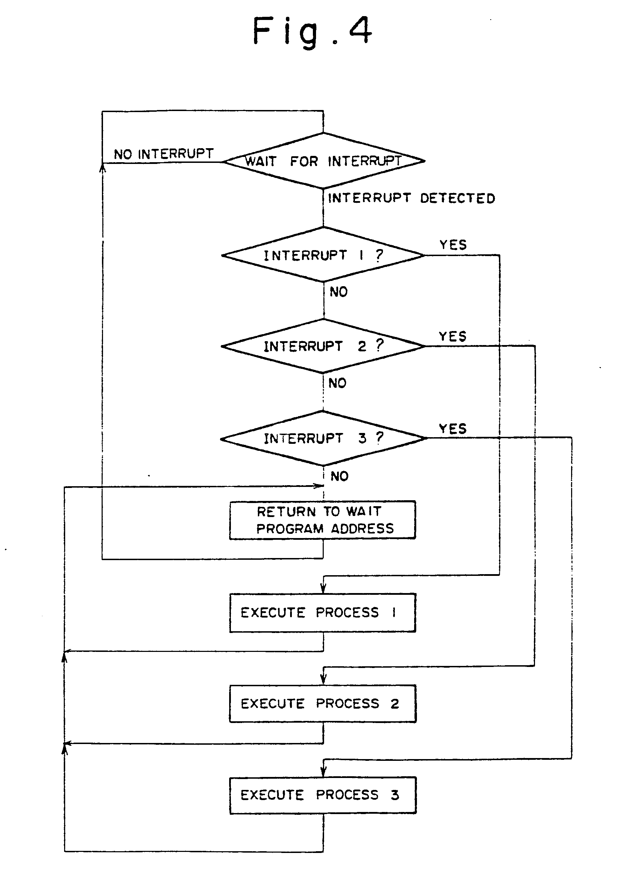

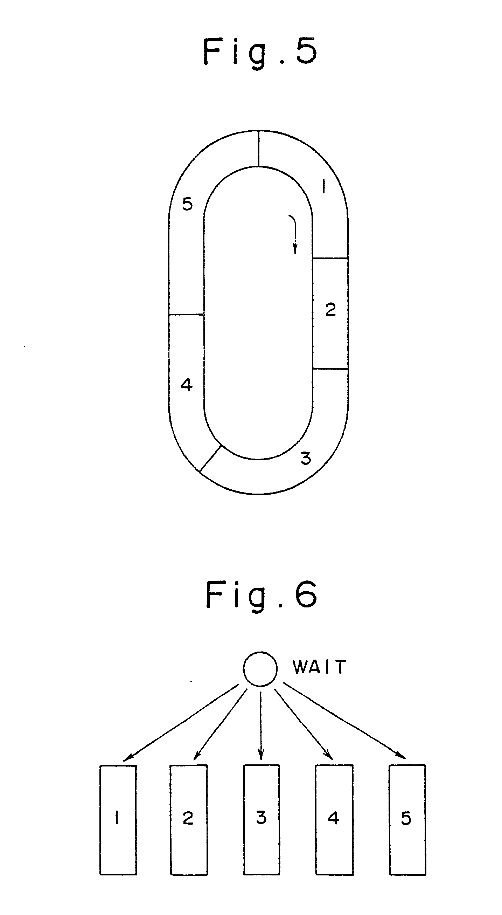

An embodiment of the present invention is designed to take advantage of characteristics of an interrupt process. Figure 4 is a flowchart illustrating a control procedure in such an embodiment. When an interrupt request signal 1 is received, from a main CPU (in the arithmetic control unit of the apparatus concerned), by an individual drive unit CPU waiting for such an interrupt command (i.e. operating an interrupt wait program), the drive unit CPU accepts the request and executes a process 1 according to a prescribed program. When the process 1 is completed, the drive unit CPU resumes its previously interrupted operation at a predetermined address, thereby being caused to re-enter its interrupt wait program. Subsequently, the CPU is caused to execute processes 2 and 3 in response to interrupt requests 2 and 3 respectively, returning in each case thereafter to the interrupt wait program. Such an interrupt procedure will be compared with an alternative interrupt procedure shown in Figure 5. As shown in Figure 5, interrupt requests 1 through 5 are successively accepted by a CPU which in each case jumps to a certain address to execute a program. In an embodiment of the invention, independent interrupt wait addresses are established respectively for interrupt requests 1 through 5 (Fig 6.). Such operation can enable a processing program, to be executed by a microcomputer, to be composed entirely of interrupt programs, successive required procedures being started in response to respective electric signals applied to an interrupt input terminal.

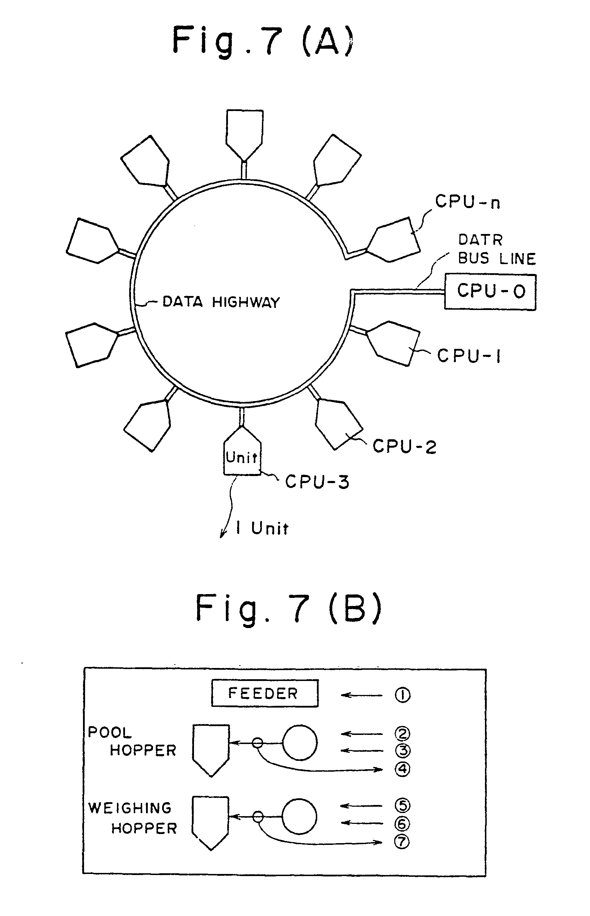

An embodiment of the present invention will now be described in greater detail with reference to Figures 7 through 10.

A combinatorial weighing apparatus to which the embodiment can be applied has a plurality of independent drive units, and central processing units CPU-1 through CPU-n are associated respectively with those drive units and connected to a main central processing unit CPU-0, in an arithmetic control unit, for high-level processing operations. Figure 7(A) schematically shows such a computerized control system in which the drive unit (slave) CPUs, CPUI through CPU-n, are interconnected by a data highway coupled by a data bus line to the main (master) CPU CPU-0.

Each of the drive units is constructed as shown in Figure 7(B). Each drive unit is composed of a feedertime/feeder-strength control device 1, a pool hopper clutch 2, a pool hopper brake 3, a pool hopper operation sensor 4, a weighing hopper clutch 5, a weighing hopper brake 6, and a weighing hopper operation sensor 7. A feeder is controlled by the feeder-time/feeder-strength control device 1. A pool hopper is operated with the pool hopper clutch 2 and the pool hopper brake 3. The pool hopper operation sensor 4 ascertains whether the pool hopper has operated properly or not. A weighing hopper is operated with the weighing hopper clutch 5 and the weighing hopper brake 6. The weighing hopper operation sensor 7 ascertains whether the weighing hopper has operated properly or not.

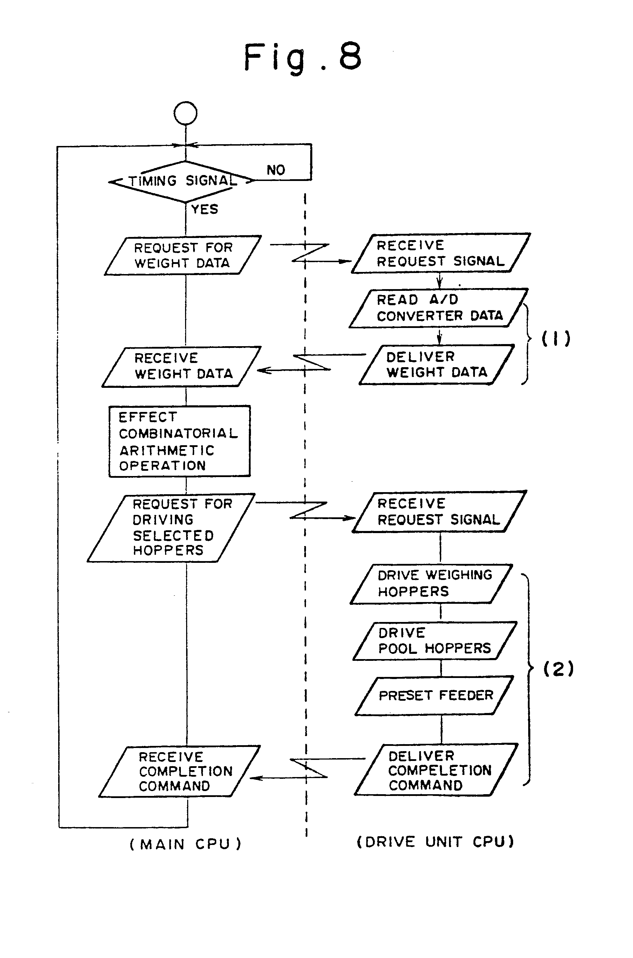

Figure 8 is a flowchart of processes of operation of the main CPU CPU-0 and the driver unit CPUs CPU-1 through CPU-n and their interrelationship. When a timing signal is given by a packaging machine to the main CPU, the main CPU delivers a weight data request signal to each of the driver unit CPUs. In response to such a weight data request signal from the main CPU, the drive unit CPUs read weight data from the weighing machines into the A/D converters and deliver the weight data to the main CPU {step (1)}. The main CPU stores the weight data, effects a combinatorial operation on the weight data, selects those weighing hoppers which give an optimum weight combination, and issues drive request signals to drive unit CPUS for driving the weighing machines. The drive unit CPUs, having received the request signals, drive the weighing hoppers, the pool hoppers, and preset the feeder, and, upon completion of such control, deliver a completion command to the main CPU {processing step (2)}.

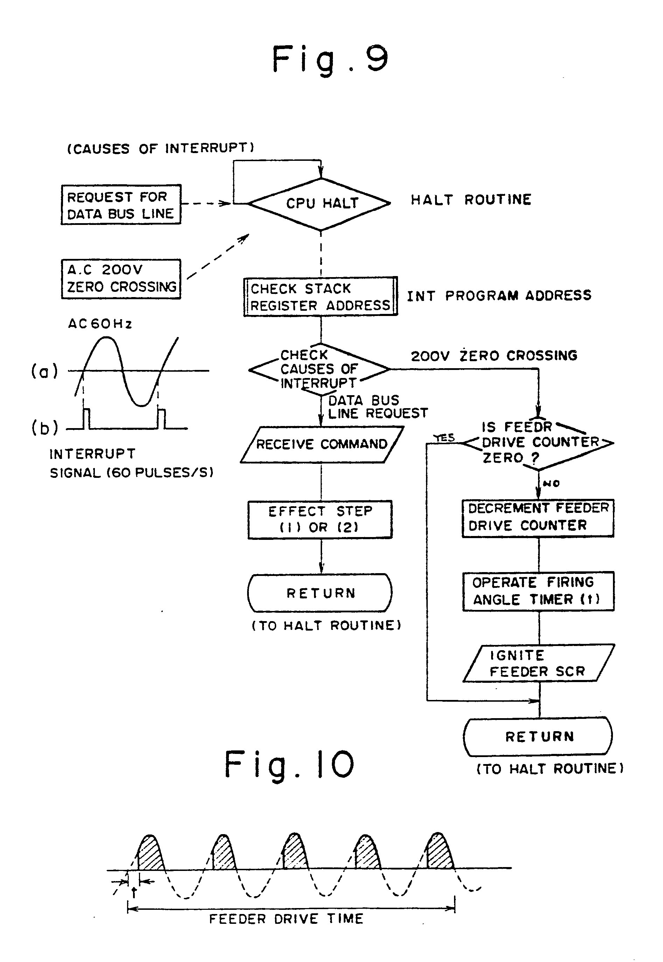

Figure 9 shows a flowchart of specific details of an interrupt process of the slave CPU in each drive unit. The interrupt process may be started either by a request signal received from the main CPU, via the data bus line, or by an auxiliary interrupt signal generated at a zero crossing point of an AC power supply, when an AC 200 V changes from a negative voltage to a positive voltage. The zero crossing point is detected from an AC power supply which drives the electromagnetic feeder. Therefore, where a power supply of 60 Hz is employed, 60 successive interrupt signals per second are generated. In normal operation of an embodiment of the invention, each interrupt signal is applied during a HALT (interrupt wait) routine of the CPU. If abnormal conditions obtain, however, the CPU may be running out of control when the interrupt signal is applied. When the interrupt signal is applied, the drive unit CPU checks a stack register address to ascertain if the HALT condition of the CPU has been executed at a normal address thereby determining whether the CPU has run out of control or not. If the CPU finds that it has been running out of control, then it carries out a self-resetting operation in which the address is rewritten as a proper address, i.e. an address in the HALT routine, and input/output ports are initialized.

The drive unit CPU then checks what has caused the interrupt process. If the interrupt process was started by a data bus line request from the main CPU, then the step (1) or (2) is executed. After the step (1) or (2) has been completed, the drive unit CPU returns to the HALT routine.

If the interrupt process was started by an 200-V AC zero crossing, the drive unit CPU first ascertains if the count of a feeder drive counter is zero or not. If zero, then the drive unit CPU returns to the HALT routine. The feeder drive counter is set to a preset value in a feeder presetting stage in the step (2) in Figure 8, after a hopper drive command has been received. When the feeder drive counter is set to a non-zero numerical value, a firing angle timer for the SCR for driving the electromagnetic feeder is actuated to trigger the SCR at a phase angle t as shown in Figure 10, and then the drive unit CPU returns to the HALT routine. The feeder operates for a prescribed time, namely the number of power-supply periods set by the drive counter. If the operation time is 0.3 second, then the feeder is driven for 18 periods in the case of a 60 Hz power supply. The operation continues until the count of the drive counter becomes zero, the SCR is switched off and the drive unit CPU returns to the HALT routine, as illustrated in Figure 9.

While the embodiment has been described in terms of a combinatorial weighing apparatus, the invention should not be interpreted as being limited to weighing apparatus, but may be applied to a combinatorial counting apparatus in which the weights of articles in the weight hoppers are converted into the numbers of the articles, a combinatorial arithmetic operation is effected on the numbers of the articles, and an optimum combination of added numbers which are equal or closest to a preset target number is found.

Although a certain preferred embodiment has been shown and described, it should be understood that many changes and modifications may be made therein without departing from the basic concepts of the present invention.

## Claims

1. Combinatorial weighing or counting apparatus, for measuring out a desired batch of articles, comprising:

a plurality of weighing machines $(W_1 \ldots W_n)$ for receiving individual quantities of the articles to be measured out and providing respective weight values $(X_1 \ldots X_n)$, indicative of the weights of the individual quantities concerned, or number values indicative of the numbers of articles in the individual quantities concerned; and

selection means (4) including a central processing unit (CPU-0) for performing a combinatorial arithmetic operation, on the basis of the said weight or number values and a preset target total weight $(X_s)$ or number, to select a best acceptable combination of the said individual quantities, and for causing the individual quantities belonging to the selected combination to be discharged from their respective machines and brought together to form a desired batch;

characterised in that the central processing unit (CPU-0) of the said selection means is connected, as a master CPU, to control respective drive units of the said weighing machines through the intermediary of respective slave CPUs (CPU-1, ..., CPU-n) connected individually to those drive units, each operational command from the master CPU to any one of the slave CPUs comprising an interrupt command to that slave CPU;

and further characterised by signal generating means connected with an AC power supply for each of the said drive units and operable to apply successive auxiliary interrupt signals to each of the said slave CPUs in synchrony with successive zero crossing points of the AC power supply, each slave CPU (CPU-1, ..., CPU-n) being such that it is caused by each auxiliary interrupt signal to effect a self-resetting operation which returns the slave CPU to a normal state if it has been running out of control.

2. Apparatus as claimed in claim 1, wherein command signals from the said master CPU to the individual slave CPUs are delivered through a data bus line connected to the master CPU.

3. Apparatus as claimed in claim 2, wherein the individual slave CPUs are interconnected by a data highway connected to the master CPU by the said data bus line.

4. Apparatus as claimed in claim 1, 2 or 3, wherein each operational command received by a slave CPU from the master CPU causes the slave CPU to effect the said self-resetting operation before executing the specific operation called for by that command.

## Patentansprüche

1. Kombinatorische Wäge- oder Zählvorrichtung zum Ausmessen einer gewünschten Artikelcharge, mit:

mehreren Wägemaschinen $(W_1 \ldots W_n)$ zum Aufnehmen individueller Mengen der auszumessenden Artikel und zum Liefern von jeweiligen, die Gewichte der betreffenden individuellen Mengen anzeigenden Gewichtswerten ($X_1 ... X_n$) oder von die Anzahl der in den betreffenden individuellen Mengen enthaltenen Artikel anzeigenden Zahlenwerten; und

Auswahlmitteln (4) mit einer zentralen Verarbeitungseinheit (CPU-0) zur Durchführung einer kombinatorischen arithmetischen Operation auf der Basis der genannten Gewichts- oder Zahlenwerte und eines/r voreingestellten Zielgesamtgewichts ($X_s$) oder -anzahl, um eine beste akzeptable Kombination der individuellen Mengen auszuwählen, und zum Veranlassen der Ausgabe der zu der ausgewählten Kombination gehörenden individuellen Mengen aus ihren jeweiligen Wägemaschinen und des Zusammenbringens zur Bildung einer gewünschten Charge;

dadurch gekennzeichnet, daß die zentrale Verarbeitungseinheit (CPU-0) der genannten Auswahlmittel als Master-CPU derart geschaltet ist, daß sie jeweilige Treibereinheiten der Wägemaschinen über jeweilige mit diesen Treibereinheiten einzeln verbundene Slave-CPUs ($CPU_1$, ..., $CPU_n$) steuert, wobei jeder Operationsbefehl der Master-CPU an jede beliebige der Slave-CPUs einen Unterbrechungsbefehl an diese Slave-CPU enthält;

und ferner gekennzeichnet durch mit einer Wechselstromquelle verbundene Signalerzeugungsmittel für jede der Treibereinheiten, die jeder der Slave-CPUs synchron mit aufeinanderfolgenden Nulldurchgangspunkten der Wechselstromquelle aufeinanderfolgende Hilfs-Unterbrechungssignale zuführen, wobei jede Slave-CPU ($CPU_1$, ..., $CPU_n$) so ausgebildet ist, daß sie von jedem Hilfs-Unterbrechungssignal veranlaßt wird, eine selbstrücksetzende Operation auszuführen, welche die Slave-CPU in einen normalen Zustand zurückversetzt, wenn sie außer Kontrolle geraten ist.

2. Vorrichtung nach Anspruch 1, bei der Befehlssignale der Master-CPU an die einzelnen Slave-CPUs durch eine mit der Master-CPU verbundene Datenbusleitung übertragen werden.

3. Vorrichtung nach Anspruch 2, bei der die einzelnen Slave-CPUs miteinander durch eine Daten-Sammelleitung verbunden sind, welche durch die genannte Datenbusleitung mit der Master-CPU verbunden ist.

4. Vorrichtung nach Anspruch 1, 2 oder 3, bei der jeder von einer Slave-CPU empfangene Operationsbefehl der Master-CPU die Slave-CPU veranlaßt, vor der Ausführung der durch den Befehl angeordneten bestimmten Operation die selbstrücksetzende Operation durchzuführen.

**Revendications**

1. Appareil de pesage ou de comptage combinatoire, destiné à mesurer un lot voulu d'articles, comportant:

une pluralité de machines de pesage ($W_1 ... W_n$) destinées à recevoir des quantités individuelles d'articles à mesurer et délivrant des valeurs respectives de poids ($X_1 ... X_n$), indicatives des poids des quantités individuelles concernées, ou des valeurs de nombre indicatives des nombres d'articles des quantités individuelles concernées; et

des moyens de sélection (4) comportant une unité de traitement centrale (CPU-0) destinée à effectuer une opération arithmétique combinatoire, sur la base desdites valeurs de poids ou de nombre ainsi que d'un poids ou d'un nombre total de cible présélectionné ($X_s$), afin de sélectionner une combinaison la plus acceptable desdites quantités individuelles, et à provoquer le déchargement desdites quantités individuelles appartenant à ladite combinaison sélectionnée, à partir de leurs machines respectives, et regroupées ensemble afin de former un lot voulu;

caractérisé en ce que l'unité de traitement centrale (CPU-0) desdits moyens de sélection est reliée, en tant que CPU maître, afin de commander les unités d'entraînement respectives desdites machines de pesage par l'intermédiaire de CPU esclaves respectifs (CPU-1 ... CPU-n) reliés individuellement à ces unités d'entraînement, chaque commande opérationnelle provenant du CPU maître et délivrée à un quelconque des CPU esclaves comportant une commande d'interruption pour ce CPU esclave;

et caractérisé en outre par des moyens de génération de signal reliés à une alimentation en courant alternatif pour chacune desdites unités d'entraînement et destiné à appliquer des signaux d'interruption auxiliaires successifs à chacun desdits CPU esclaves en synchronisme avec les points de passage par zéro successifs de l'alimentation en courant alternatif, chaque CPU esclave (CPU-1 ... CPU-n) étant tel qu'il réagisse à chaque signal d'interruption auxiliaire pour effectuer une opération de remise à zéro automatique replaçant le CPU esclave dans son état normal si celui-ci a échappé à tout contrôle.

2. Appareil selon la revendication 1, dans lequel les signaux de commande provenant dudit CPU maître et délivrés auxdits CPU esclaves individuels sont délivrés par l'intermédiaire d'une ligne de bus de données reliée au CPU maître.

3. Appareil suivant la revendication 2, dans lequel les CPU esclaves individuels sont interconnectés par un chemin de données relié au CPU maître par l'intermédiaire de ladite ligne de bus de données.

4. Appareil suivant les revendications 1, 2 ou 3, dans lequel chaque commande opérationnelle reçue par un CPU esclave et provenant du CPU maître déclenche ladite opération de remise à zéro automatique du CPU esclave avant d'exécuter l'opération spécifique requise par cette commande.

# Fig.1

## Fig.2

## Fig.3

# Fig.4

# Fig.5

# Fig.6

# Fig.7 (A)

# Fig. 7 (B)

# Fig.8

# Fig. 9

(CAUSES OF INTERRUPT)

```
REQUEST FOR        CPU HALT        HALT ROUTINE
DATA BUS LINE

A.C 200V
ZERO CROSSING

AC 60Hz                CHECK STACK        INT PROGRAM ADDRESS
                       REGISTER ADDRESS

(a)                    CHECK              200V ZERO CROSSING
                       CAUSES OF
                       INTERRUPT
                              DATA BUS
(b)                           LINE REQUEST        IS FEEDR
                                                  DRIVE COUNTER    YES
INTERRUPT              RECEIVE COMMAND             ZERO ?
SIGNAL (60 PULSES/S)
                                                        NO
                                           DECREMENT FEEDER
                       EFFECT STEP         DRIVE COUNTER
                       (I) OR (2)

                                           OPERATE FIRING
                       RETURN              ANGLE TIMER (†)

                       (TO HALT ROUTINE)   IGNITE
                                           FEEDER SCR

                                           RETURN
# Fig. 10                                  (TO HALT ROUTINE)
```

FEEDER DRIVE TIME